# EUROPÄISCHE PATENTSCHRIFT

(11) **EP 1 525 082 B1**
(45) Veröffentlichungstag und Bekanntmachung des Hinweises auf die Patenterteilung: **30.12.2009**
(21) Anmeldenummer: 03764942.3
(22) Anmeldetag: 07.07.2003
(51) Int. Cl.: B29C 47/10, B29C 43/00

(54) **GLASFASERVERSTÄRKTE THERMOPLASTISCHE KUNSTSTOFFE**
GLASS-FIBRE REINFORCED THERMOPLASTIC PLASTICS
MATIERES PLASTIQUES THERMOPLASTIQUES RENFORCEES DE FIBRES DE VERRE

(30) Priorität: 19.07.2002 DE 10232485
(43) Veröffentlichungstag der Anmeldung: 27.04.2005
(73) Patentinhaber: LANXESS Deutschland GmbH, 51369 Leverkusen (DE)
(72) Erfinder: LANG, Steffen, 50937 Köln (DE); JOACHIMI, Detlev, 47800 Krefeld (DE); KONEJUNG, Klaus, 51467 Bergisch Gladbach (DE); DE BOCK, Maarten, B-2920 Kalmthout (BE)
(86) Internationale Anmeldenummer: PCT/EP2003/007234
(87) Internationale Veröffentlichungsnummer: WO 2004/009325

(56) Entgegenhaltungen:
- US-A- 3 632 254
- US-A- 5 165 941
- US-B1- 6 186 769

## Beschreibung

Die vorliegende Erfindung betrifft Langfaserverstärkung von thermoplastischen Kunststoffen (auch Thermoplsate genannt) durch Direktcompoundierung mit Schnittglasfasem.

Die Erfindung beschreibt ein Verfahren zur Herstellung glas- und/oder kohlenstofffaserverstärkter Formteile, wobei die durchschnittliche Faserlänge deutlich über der Faserlänge liegt, die mit konventionell compoundierten thermoplastischen Formmassen ansonsten gleicher Zusammensetzung im üblichen Spritzgießprozess zugänglich ist. Das Verfahren ist **dadurch gekennzeichnet, dass** zunächst eine Polymerschmelze erzeugt wird, in die konventionelle Schnittfasern (Chopped Strands, mittlere Faserlänge < 10 mm) eingebracht werden, die erhaltene Schmelze in ein Spritzgießaggregat oder eine Presse übergeben und dann durch Spritzgießen, Pressen oder vergleichbare Verfahren, in die erwünschte Form gebracht wird. Entscheidend ist, dass die Schmelze nach Einarbeitung der Fasern nicht wieder erstarrt und vor der Formgebung nicht erst wieder aufgeschmolzen werden muss. Das Verfahren ist prinzipiell auch auf Extrusionsverfahren wie Profilextrusion und Blasformen übertragbar. Als Verstärkungsmaterial kommen weiterhin auch andere Fasermaterialien in Betracht, die in geschnittener Form mit durchschnittlichen Faserlängen < 25 mm zudosiert werden können.

Grundsätzlich besteht ein Interesse an Verfahren zur Herstellung faserverstärkter Formteile aus thermoplastischen Formmassen, die eine möglichst große durchschnittliche Faserlänge ermöglichen, da hierdurch die mechanischen Eigenschaften, insbesondere Steifigkeit und Festigkeit positiv beeinflusst werden. Das Verfahren sollte möglichst universell einsetzbar sein und gleichzeitig geringstmöglichen manuellen Arbeitsaufwand und Rohstoffkosten erfordern.

Für die Herstellung langglasfaserverstärkter Formteile werden z.B. langfaserverstärkte Granulate oder Pellets eingesetzt (typische Längen sind z.B. 12 - 25 mm), die über Pultrusionsverfahren hergestellt werden. Nachteilig ist hierbei, dass es bei der Verarbeitung solcher Pultrudate auf Spritzgießmaschinen während des Aufschmelzprozesses zu starken mechanischen Beanspruchungen kommt, die zum Bruch der langen Fasern führen. Nur ein geringer Bruchteil an Langglasfasern bleibt erhalten. Durch schonende Verarbeitungsbedingungen, z.B. Einsatz von Schnecken geringer Kompression und großem Länge/Durchmesser-Verhältnis, geringem Staudruck, möglichst geringer Einspritzgeschwindigkeit und angepasste Rückströmsperren kann die mittlere Faserlänge im Formteil vergrößert werden. Durch Maßnahmen bei der Werkzeugauslegung wie Verwendung eines möglichst großen Stangenangusssystems und Vermeidung scharfer Umlenkungen im Schmelzekanal ist ebenfalls eine Erhöhung der mittleren Glasfaserlänge möglich.

Zur teilweisen Lösung des Problems des Glasfaserbruches beim kritischen Aufschmelzprozess wurden sogenannte Direktcompoundier-Verfahren entwickelt, bei denen zunächst der thermoplastische Kunststoff in einem Doppelschneckenextruder aufgeschmolzen wird. Anschließend werden die faserförmigen Verstärkungsstoffe zudosiert und in die aufgeschmolzene Kunststoffmatrix eingemischt. Dieser Prozess kann kontinuierlich (unter Zuhilfenahme eines Pufferspeichers) oder diskontinuierlich erfolgen. Das Kunststoff/Faser-Gemisch wird nach dem Compoundieren in eine Kolbeneinspritzeinheit transferiert und anschließend über einen Einspritzkolben in das Formgebungswerkzeug eingespritzt.

In einem weiteren bekannten Verfahren wird zunächst der thermoplastische Kunststoff in einem Doppelschneckenextruder aufgeschmolzen und die Schmelze anschließend zusammen mit den Verstärkungsfasern einem zweiten Zweischneckengerät zugeführt. In diesem werden die beiden Komponenten compoundiert. Das Gemisch wird anschließend als Strang ausgetragen, abgelängt und mittels Handlingsystem einer Presse zugeführt. Eine spezielle Ausführungsform dieses Verfahrens, wobei Glasfasern von mindestens 25 mm Länge zur Verstärkung verwendet werden, ist in US-A 5 165 941 beschrieben.

Die bekannten Verfahren zur Herstellung von Formteilen mit Langglasfaserverstärkung haben den Nachteil, dass in allen Fällen Langglasfasern eingesetzt werden müssen, die z.B. während des Compoundiervorganges von Rovings abgewickelt werden. Das Handling von Rovings ist im Vergleich zur gravimetrischen Dosierung von Schnittglasfaser (Faserlänge max. 6 mm) wesentlich aufwendiger.

Alle existierenden Verfahren gehen davon aus, dass zur Erzielung einer im Vergleich zur üblichen Spritzgießverarbeitung signifikant größeren Glasfaserlänge Endlosfasern (sogenannte Rovings) oder zumindest im Vergleich zu handelsüblichen Schnittglasfasern (sogenannte chopped srands mit 3 bis 6 mm Länge) sehr lange Glasfasern (im Falle des in US-A 5 165 941 beschriebenen Verfahrens Glasfasern mit einer Länge von mindestens 25 mm) eingesetzt werden müssen.

Überraschend wurde nun jedoch gefunden, dass auch bei Einsatz von relativ kurzen Fasern, der sogenannten Chopped Strands, bei Anwendung geeigneter Verfahren Faserlängen im Formteil erzielt werden können, die signifikant über denen liegen, die bei Verarbeitung konventioneller Compounds im Standardspritzgießverfahren erreicht werden können. Voraussetzung für den Erfolg ist lediglich, dass die entsprechenden Glas- oder Kohlenstofffasern schonend in die Thermoplastschmelze eingearbeitet werden und die Schmelze (bevorzugt sofort) schonend weiterverarbeitet wird, insbesondere ohne dass es zwischenzeitlich zur Erstarrung und/oder Kristallisation der Formmasse kommt.

Beider vorliegenden Erfindung handelt es sich um Verfahren, bei denen für den Compoundierschritt Zweiwellenextruder (zum Beispiel sogenannte ZSK von der Firma KWP) oder Kneter eingesetzt werden und die Einspritzeinheit eine Kolbenspritzgießmaschine ist.

Für das erfindungsgemäße Verfahren geeignet sind grundsätzlich alle Thermoplaste bei denen es sinnvoll ist, Glas- oder Kohlenstofffaserverstärkung oder ähnliche Verstärkungsstoffe einzusetzen. Besonders geeignet sind technische Thermoplaste wie z.B. Polyamide, Polyalkylenterephthalate, Blends verschiedener technischer Thermoplaste untereinander bzw. mit zähmodifizierenden Blendpartnern. Außerdem ist das Verfahren auch für Hochleistungsthermoplaste wie z.B. Polyphenylensulfid geeignet.

Die thermoplastischen Formmassen können dabei die üblicherweise eingesetzten Additive wie Verarbeitungshilfsmittel (Gleit- und Entformungsmittel), Elastomermodifikatoren, Flammschutzmittel, Nukleierungsmittel (bei teilkristallinen Polymeren), Farbmittel, Ruße, Leitfähigkeitsadditive, Antistatika, Weichmacher, und weitere Füll- und Verstärkungsstoffe, insbesondere mineralische Füllstoffe, enthalten.

Die Zugabe dieser Stoffe soll dabei bevorzugt selbstverständlich so erfolgen, dass die Schädigung der erfindungsgemäß zugegebenen Fasern möglichst gering bleibt.

Als faserförmiges Verstärkungsmaterial im Sinne der Erfindung werden insbesondere Glasfasern, Kohlenstofffasern, Stahlfasern, metallisierte Glasfasern, Natur- und Polymerfasern verstanden, sofern diese als Faserbündel mit einer mittleren Faserlänge von bevorzugt 2 bis 25 mm, besonders bevorzugt 3,5 bis 6 mm eingesetzt werden, mit der betreffenden Formmasse verträglich sind und - im Falle der Polymerfasern - sich nicht in der Formmasse lösen bzw. bei den entsprechenden Verarbeitungstemperaturen aufschmelzen.

Bei der am meisten bevorzugten Verfahrensvariante werden Schnittglasfasern, sogenannte Chopped Strands, mit einer Länge von 3 bis 6 mm verwendet.

Besonders bevorzugte Thermoplaste sind Polyamide - insbesondere Polyamid 6 und Polyamid 66, Polybutylenterephthalat und seine Blends mit Polycarbonat und oder Kautschuken.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden können.

Die technisch relevanten Verfahren zur Herstellung von Polyamiden laufen bevorzugt über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt s-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die eingesetzten Polyamide können auch im Gemisch mit anderen Polyamiden und/oder weiteren Polymeren eingesetzt werden.

Zusätzlich können die Polyamidformmassen noch Brandschutzmittel wie z. B. Phosphorverbindungen, organische Halogenverbindungen, Stickstoffverbindungen und/oder Magnesiumhydroxid, Stabilisatoren, Verarbeitungshilfsmittel wie z. B. Gleitmittel, Nukleierungsmittel, Stabilisatoren, Schlagzähmodifikatoren wie z.B. Kautschuke oder Polyolefine u. ä. enthalten

### Beispiele

### Beispiel 1

Erfindungsgemäße Herstellung von Formteilen aus PA6GF30 (mit 30 Gew.-% Glasfasern verstärktes Polyamid 6). Für die Herstellung der erfindungsgemäßen Formmasse wurde PA6 (Durethan^{®} B31 SK H2.0 900050; Handelsprodukt der Firma Bayer AG, Leverkusen, Deutschland) in den Einzugsbereich eines Doppelschneckenextruders der mit einer Doppelkolbeneinspritzsystem verbunden war, dosiert. Die Zugabe der geschnittenen Glasfaser CS 7928 (Handelsprodukt der Firma Bayer AG, Leverkusen Deutschland) erfolgte kontinuierlich über ein gravimetrisches Dosieraggregat in die aufgeschmolzene Formmasse. Das Kunststoff/Faser-Gemisch wurde nach dem Compoundieren in eine Kolbeneinspritzeinheit transferiert und anschließend über einen Einspritzkolben in das Spritzgießwerkzeug (Formteilgewicht ca. 700 g; Wanddicke von ca. 3 mm) eingespritzt. Das Doppelkolbeneinspritzsystem gewährleistete eine kontinuierliche Arbeitsweise des Doppelschneckenextruders. Beim Doppelkolbeneinspritzsystem wurde die während des Einspritzens compoundierte Masse jeweils in die nicht aktive Kolbeneinspritzeinheit transferiert.

### Beispiel 2 (Vergleichsbeispiel zu Beispiel 1)

Herstellung von Formteilen aus PA6GF30 unter Verwendung von konventionellem Spritzgießmaterial. Für die Herstellung der entsprechenden Formteile wurde PA6GF30 (Durethan^{®} BKV30 H2.0 900050; Handelsprodukt der Bayer AG) auf einer Spritzgießmaschine unter Standardbedingungen im Standardspritzgießverfahren mit Hilfe des in Beispiel 1 beschriebenen Spritzgießwerkzeug zu Formteilen verarbeitet.

### Beispiel 3

Erfindungsgemäße Herstellung von Formteilen aus PA66GF30. Für die Herstellung der erfindungsgemäßen Formmasse wurde thermostabilisiertes schwarz eingefärbtes PA66 (Durethan^{®} A 30 S H2.0 900050; (Handelsprodukt der Bayer AG) in den Einzugsbereich der in Beispiel 1 beschriebenen Anlage dosiert. Die Zugabe der geschnittenen Glasfaser CS 7928 (Handelsprodukt der Bayer AG) erfolgte kontinuierlich über ein gravimetrisches Dosieraggregat in die aufgeschmolzene Formmasse. Das Kunststoff/Faser-Gemisch wurde nach dem Compoundieren in eine Kolbeneinspritzeinheit transferiert und anschließend mit Hilfe des in Beispiel 1 beschriebenen Spritzgießwerkzeuges zu Formteilen verarbeitet.

### Beispiel 4 (erstes Vergleichsbeispiel zu Beispiel 3)

Herstellung von Formteilen aus PA66GF30 unter Verwendung von konventionellem Spritzgießmaterial. Für die Herstellung der entsprechenden Formteile wurde PA66GF30 (Durethan^{®} AKV30 H2.0 900050; Handelsprodukt der Bayer AG) auf einer Spritzgießmaschine unter Standardbedingungen im Standardspritzgießverfahren mit Hilfe des in Beispiel 1 beschriebenen Spritzgießwerkzeuges zu Formteilen verarbeitet.

### Beispiel 5 (zweites Vergleichsbeispiel zu Beispiel 3)

Nicht erfindungsgemäße Herstellung von Formteilen aus PA66GF30 unter Verwendung von Endlosglasfaser (mit einem Faserdurchmesser von 11 µm und einer für Polyamid geeigneter Faserschlichte). Für die Herstellung der Formmasse wurde PA66 (Durethan^{®} A 30 S H2.0 900050; Handelsprodukt der Bayer AG) in den Einzugsbereich des Doppelschneckenextruders der in Beispiel 1 beschriebenen Anlage dosiert. Die Zugabe der Endlosglasfaser erfolgte durch die Rotationsbewegung der Schnecken im Doppelschneckenextruder. Die Fasern wurden in die bereits aufgeschmolzene Formmasse eingearbeitet. Die Glasfaserkonzentration konnte hierbei über die Menge des zudosierten Thermoplasts, die Schneckendrehzahl, die sogenannte Tex-Zahl der Fasern (die Tex-Zahl ist ein Maß für die Anzahl der Einzelfasern, die in einem Faserstrang gebündelt sind) oder die Anzahl der verwendeten sogenannten Rovings (Wickel der Faserbündel) variiert werden.

Die Zudosierung von Endlosfasern erforderte mehr Handlingsaufwand als die Dosierung von Schnittglasfaser, die über gravimetrische Waagen problemlos möglich war. Das Kunststoff/Faser-Gemisch wurde nach dem Compoundieren in eine Kolbeneinspritzeinheit transferiert und anschließend mit Hilfe des in Beispiel 1 beschriebenen Spritzgießwerkzeuges zu Formteilen verarbeitet.

Aus den Formteilen wurden quadratische Platten der Kantenlängen 55 mal 55 mal 3 mm³ bzw. Flachstäbe der Kantenlängen 80 mal 10 mal 3 mm³ entnommen und auf mechanische Eigenschaften und Glasfaserlängenverteilung untersucht. Die Ergebnisse sind in Tabelle 1 zusammengestellt.

Der Vergleich der erfindungsgemäßen Beispiele mit den Vergleichsbeispielen zeigt, dass Festigkeit, Modul, Arbeitsaufnahme im biaxialen Durchstoßversuch und Glasfaserlänge bei deutlich höheren Werten liegen als bei den Vergleichsversuchen.

**Tabelle 1**

| | **Beispiel 1** | **Beispiel 2** **(Vergleich zu Beispiel 1)** | **Beispiel 3** | **Beispiel 4** **(Vergleich zu Beispiel 3)** | **Beispiel 5** **(Vergleich zu Beispiel 3)** |
|---|---|---|---|---|---|
| Biegespannung bei 3,5 % Randfaserdehnung [Mpa] | 200 | 171 | 208 | 172 | 179 |
| Biegefestigkeit [Mpa] | 220 | 195 | 246 | 202 | 228 |
| Biege-Modul [Mpa] | 6590 | 5520 | 6320 | 5470 | 5910 |
| Mittelwert der Glasfaserlängenverteilung [µm] | ca. 420 | ca. 270 | ca. 490 | ca. 270 | ca. 830 |

Aus der Tabelle ist ersichtlich, dass die wichtigen mechanischen Eigenschaften Biegespannung, Biegefestigkeit und Biege-Modul bei den erfindungsgemäß hergestellten Formteilen entsprechend Beispiel 1 und Beispiel 3 bei signifikant höheren Werten liegen. Der Mittelwert der Glasfaserlängenverteilung liegt beim erfindungsgemäßen Beispiel 3 deutlich über dem Mittelwert, der bei Verarbeitung von Fertigcompound mit gleicher Glasfaserkonzentration erzielt werden kann (Beispiel 4). Obwohl die Glasfaserlänge des Compounds, das unter Verwendung von Endlosglasfaser hergestellt wurde (Beispiel 5) größer ist als bei Beispiel 3, werden bei Beispiel 3 bessere mechanische Kennwerte erreicht.

## Patentansprüche

1. Verfahren zur Herstellung von Formteilen aus faserverstärkten thermoplastischen Formmassen mit mittleren Faserlängen von mindestens 400 µm, **dadurch gekennzeichnet, dass** Faserbündel mit einer Länge von 2 bis 25 mm in einer Thermoplastschmelze in einem Compoundieraggregat homogen verteilt werden und die Schmelze anschließend direkt, d.h. ohne zwischenzeitliches Abkühlen, Erstarren und Wiederaufschmelzen, durch Spritzgießen in eine Form gebracht wird und dort erstarrt, wobei für den Compoundierschritt Zweiwellenextruder oder Kneter eingesetzt werden und die Einspritzeinheit eine Kolbenspritzgießmaschine ist.

2. Verfahren nach Anspruch 1, bei dem die Faserbündel aus beschlichteten Glasfasern mit einem mittleren Durchmesser von 9 bis 17 µm bestehen.

3. Verfahren nach Anspruch 1, bei dem die Fasern aus Kohlenstofffasern mit einem mittleren Durchmesser von 6 bis 17 µm bestehen.

4. Verfahren nach Anspruch 1, bei dem die Thermoplastschmelze zum überwiegenden Teil aus Polyamid besteht.

5. Verfahren nach Anspruch 1, bei dem die Thermoplastschmelze zum überwiegenden Teil aus Polyamid 6 oder Polyamid 66 besteht.

6. Verfahren nach Anspruch 1, bei dem die Thermoplastschmelze zum überwiegenden Teil aus thermoplastischem Polyester besteht.

7. Verfahren nach Anspruch 1, bei dem die Thermoplastschmelze zum überwiegenden Teil aus Polybutylenterephthalat besteht.

8. Verfahren nach Anspruch 1, bei dem die Thermoplastschmelze zum überwiegenden Teil aus Polyethylenterephthalat besteht.

9. Verfahren nach Anspruch 1, bei dem die Thermoplastschmelze zum überwiegenden Teil aus Polypropylen besteht.

## Claims

1. Process for forming moulded articles from fibre-reinforced thermoplastic moulding materials having average fibre lengths of at least 400 µm, **characterized in that** fibre bundles having a length of 2 to 25 mm are homogeneously dispersed in a thermoplastic melt in a compounding assembly and the melt is subsequently injected directly, i.e. without first cooling, solidifying and remelting, into a mould and solidifies therein, the compounding step utilizing twin-screw extruders or kneaders and the injecting unit being a plunger-type injection-moulding machine.

2. Process according to Claim 1, wherein the fibre bundles consist of sized glass fibres having an average diameter of 9 to 17 µm.

3. Process according to Claim 1, wherein the fibres consist of carbon fibres having an average diameter of 6 to 17 µm.

4. Process according to Claim 1, wherein the thermoplastic melt consists predominantly of polyamide.

5. Process according to Claim 1, wherein the thermoplastic melt consists predominantly of nylon 6 or nylon 66.

6. Process according to Claim 1, wherein the thermoplastic melt consists predominantly of thermoplastic polyester.

7. Process according to Claim 1, wherein the thermoplastic melt consists predominantly of polybutylene terephthalate.

8. Process according to Claim 1, wherein the thermoplastic melt consists predominantly of polyethylene terephthalate.

9. Process according to Claim 1, wherein the thermoplastic melt consists predominantly of polypropylene.

## Revendications

1. Procédé pour la fabrication de pièces moulées en masses de moulage thermoplastiques renforcées par des fibres avec des longueurs de fibres moyennes d'au moins 400 µm, **caractérisé en ce que** des faisceaux de fibres d'une longueur de 2 à 25 mm sont répartis de manière homogène dans la masse fondue du thermoplastique dans un appareil de compoundage et la masse fondue est ensuite amenée directement, c'est-à-dire sans refroidissement, solidification et nouvelle fusion intermédiaires, par moulage par injection dans un moule et se solidifie dans celui-ci, où on utilise pour l'étape de compoundage des extrudeuses à deux arbres ou des malaxeurs et l'unité de moulage par injection est une machine de moulage par injection à piston.

2. Procédé selon la revendication 1, dans lequel les faisceaux de fibres sont constitués par des fibres de verre hachées présentant un diamètre moyen de 9 à 17 µm.

3. Procédé selon la revendication 1, dans lequel les fibres sont constituées par des fibres de carbone présentant un diamètre moyen de 6 à 17 µm.

4. Procédé selon la revendication 1, dans lequel la masse fondue thermoplastique est constituée pour la plus grande partie de polyamide.

5. Procédé selon la revendication 1, dans lequel la masse fondue thermoplastique est constituée pour la plus grande partie de polyamide 6 ou de polyamide 66.

6. Procédé selon la revendication 1, dans lequel la masse fondue thermoplastique est constituée pour la plus grande partie de polyester thermoplastique.

7. Procédé selon la revendication 1, dans lequel la masse fondue thermoplastique est constituée pour la plus grande partie de poly(téréphtalate de butylène).

8. Procédé selon la revendication 1, dans lequel la masse fondue thermoplastique est constituée pour la plus grande partie de poly(téréphtalate d'éthylène).

9. Procédé selon la revendication 1, dans lequel la masse fondue thermoplastique est constituée pour la plus grande partie de polypropylène.
